# EUROPÄISCHE PATENTANMELDUNG

(11) **EP 0 704 997 A2**
(43) Veröffentlichungstag der Anmeldung: **03.04.1996**
(21) Anmeldenummer: 95115155.4
(22) Anmeldetag: 26.09.1995
(51) Int. Cl.: H04B 10/207

(54) **Telekommunikationsnetz**

(30) Priorität: 28.09.1994 DE 4434730
(71) Anmelder: SIEMENS AKTIENGESELLSCHAFT, D-80333 München (DE)
(72) Erfinder: Neidlinger, Stephan, Dr.-Ing., D-80807 München (DE)

(57) **Zusammenfassung**

In einem vorzugsweise bidirektionalen Telekommunikationsnetz mit dezentralen Einrichtungen (NT/A), insbesondere teilnehmerseitigen Netzabschlußeinrichtungen, die über jeweils einer Mehrzahl von dezentralen Einrichtungen (NT/A) gemeinsame Koaxialleitungs-Baumnetze (CN) und ggf. über ein jeweils einer Mehrzahl von Koaxialleitungs-Baumnetzen (CN) gemeinsames Lichtwellenleiter-Baumnetz mit einer demgegenüber zentralen Einrichtung (CU/A; OCC) verbunden sind, wird zum Ausgleich von auf den einzelnen Verbindungen auftretenden, ggf. unterschiedlichen Verzerrungen eine jeweils verbindungsindividuelle Vorentzerrung in den Sendern der dezentralen Einrichtungen (NT/A) durchgeführt.

## Beschreibung

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS '88, Conf. Papers 9.4.1...5; BR Telecom Technol. J. 17(1989)2, 100...113).

Die Einführung neuer Breitbandkommunikationsdienste hängt ganz allgemein ab von Art und Umfang der bereits vorhandenen Fernmeldeinfrastrukturen mit den darin bereitgestellten Telekommunikationsdiensten und von der Nachfrage nach Breitbandtelekommunikationsmöglichkeiten. Dabei wird im Bereich der Privathaushalte das potentiell grösste Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

Um einem Teilnehmer die Nutzung von Breitband-ISDN-Diensten (genannt werden z.B. interaktiver Videoabruf Video on Demand (VoD), Teleshopping, Informationsrecherche, aber auch Schmalbanddienste wie (N-)ISDN oder herkömmliche Telefonie (POTS)) zu ermöglichen, werden z.Zt. verschiedene Anschlußmöglichkeiten diskutiert. Besonders attraktiv sind Lösungen, bei denen bereits vorhandene Infrastruktur verwendet werden kann. Ein entsprechendes Medium stellen z.B. die Koaxialkabelnetze der CATV-Anbieter dar: Der Frequenzbereich beispielsweise von 50 - 450 MHz wird für konventionelle analoge (oder digitale) TV-Verteilung genutzt; der Bereich oberhalb der Fernsehverteilung ist bislang frei und läßt sich für neue Dienste nutzen. In den USA wird von einigen Cable-TV-Gesellschaften ein Teilbereich des bislang freien Bereichs für sog. Cablephone verwendet. Andere Betreiber denken an ein umfassenderes System, das einen Großteil der oben genannten Dienste im Rahmen eines Access-Networks z.B. auf ATM-Basis (AN/A) bietet, wobei in der Regel den koaxialen Teilnetzen wegen der begrenzten Reichweite eine optische Zubringerleitungen (Fiber Feeder) vorgeschaltet sein kann (TELEPHONY, 01.11.93, 48 ... 53).

In derartigen Koaxialkabelnetzen kann die Signalübertragung von der zentralen Einrichtung aus "downstream" zu den Teilnehmereinrichtungen hin in einem TDM-Zellenstrom vor sich gehen, aus dem jede Teilnehmereinrichtung nur die für ebendiese Teilnehmereinrichtung bestimmten Zellen aufnimmt, und die Signalübertragung von den Teilnehmereinrichtungen aus "upstream" zur zentralen Einrichtung hin kann in einem TDMA-Verfahren vor sich gehen, demzufolge eine Teilnehmereinrichtung einen jeden Burst mit Hilfe einer von der zentralen Einrichtung her teilnehmerindividuell eingestellten Verzögerungseinrichtung synchronisiert aussendet.

In Multipunkt-zu-Punkt-Netzen sind die Übertragungseigenschaften (Übertragungsfunktion) der einzelnen Verbindungen von den einzelnen dezentralen Einrichtungen zur zentralen Einrichtung hin im allgemeinen unterschiedlich; in TV-Koaxialkabel-Netzen treten beispielsweise unterschiedliche ortsabhängige lineare Verzerrungen (z.B. sog. "Schräglage" auf Grund eines nicht konstanten, sondern tiefpaßartigen Amplitudengangs) auf.
Zum Ausgleich der unterschiedlichen Verzerrungen kann man im Empfänger der zentralen Einrichtung eine adaptive Entzerrung durchführen. Da bei der burstartigen upstream-Übertragung jede dezentrale Einrichtung jeweils nur kurzzeitig sendet, muß die jeweilige verbindungsindividuelle Neueinstellung des Entzerrers im zentralen Empfänger allerdings sehr schnell vor sich gehen, wobei zugleich nur ein sehr kurzer Zeitraum zur Messung der jeweiligen Übertragungsfunktion zur Verfügung steht. Damit erweist sich eine solche Entzerrung als relativ aufwendig.
Die Erfindung zeigt demgegenüber einen Weg zu einer weniger aufwendigen Entzerrung.

Die Erfindung betrifft ein vorzugsweise bidirektionales Telekommunikationsnetz mit dezentralen Einrichtungen, insbesondere teilnehmerseitigen Netzabschlußeinrichtungen, die über jeweils einer Mehrzahl von dezentralen Einrichtungen gemeinsame Koaxialleitungs-Baumnetze und ggf. über ein jeweils einer Mehrzahl von Koaxialleitungs-Baumnetzen gemeinsames Lichtwellenleiter-Baumnetz mit einer demgegenüber zentralen Einrichtung verbunden sind, wobei zum Ausgleich von auf den einzelnen Verbindungen auftretenden, ggf. unterschiedlichen Verzerrungen jeweils verbindungsindividuell eine vorzugsweise adaptive Entzerrung durchgeführt wird; dieses Telekommunikationsnetz ist erfindungsgemäß gekennzeichnet durch eine jeweils verbindungsindividuelle Vorentzerrung in den Sendern der dezentralen Einrichtungen, wobei die Einstellinformation für den Vorentzerrer der dezentralen Einrichtung aus dem von der zentralen Einrichtung zur dezentralen Einrichtung übertragenen Signal gewonnen wird.
Dabei kann in weiterer Ausgestaltung der Erfindung bei Nachentzerrung des in der dezentralen Einrichtung von der zentralen Einrichtung her empfangenen Signals die Einstellinformation aus der Einstellinformation für den Nachentzerrer gebildet werden.
Die Vorentzerrer brauchen prinzipiell nur einmal eingestellt zu werden; es kann aber auch eine in größeren zeitlichen Abständen wiederholte Vorentzerrer-Neueinstellung vorgenommen werden, um so z.B. temperatur- oder alterungsbedingte Änderungen der jeweiligen Übertragungsfunktion auszugleichen.

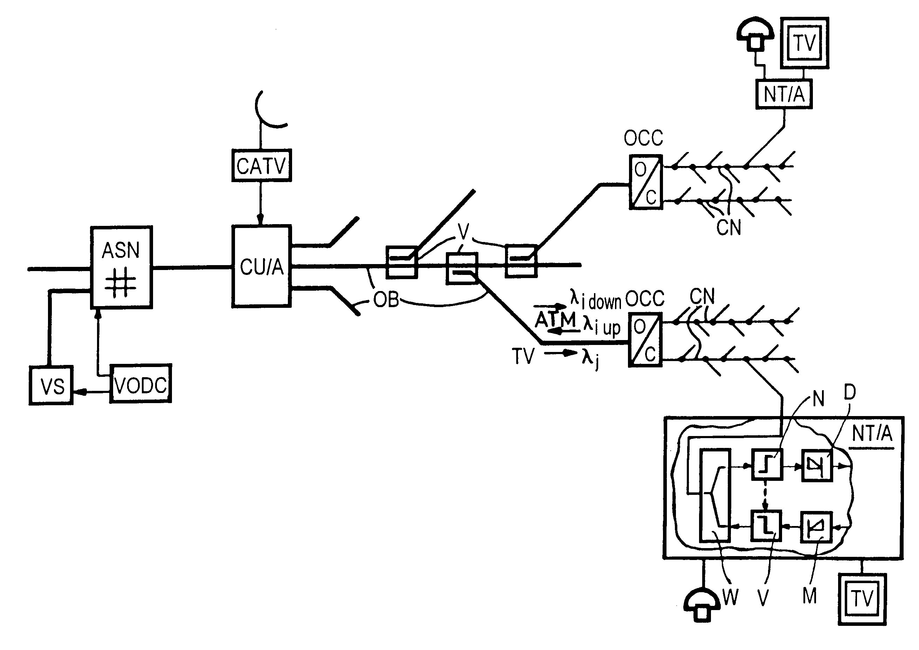

Weitere Besonderheiten der Erfindung werden aus der nachfolgenden Erläuterung eines Ausführungsbeispiels für ein Telekommunikationssystem gemäß der Erfindung anhand der Zeichnung ersichtlich.

In der Zeichnung ist schematisch in einem zum Verständnis der Erfindung erforderlichen Umfang ein Teilnehmeranschlußnetz gemäß der Erfindung dargestellt. Dabei sind im rechten Teil der Zeichnung Koaxialleiternetze CN in der üblichen Baumstruktur angedeutet, wie sie in der Regel bereits verlegt sein werden.
Teilnehmerseitig sind die Koaxialleiter jeweils mit einer Netzabschlußeinrichtung NT/A abgeschlossen, welche ihre Empfangs- und Sendesignale jeweils derart konvertieren möge, daß der Anschluß gängiger Endgeräte möglich ist; eine Netzabschlußeinrichtung NT/A weist z.B. Anschlüsse für Verteilfernsehen bzw. Video on Demand, für herkömmliche Telefonie (POTS) u./o. Schmalband-ISDN oder auch für einen beliebigen Breitband-ISDN-Dienst auf.
Auf der teilnehmerabgewandten Seite sind die Koaxialleiternetze CN jeweils über eine Opto-/Coax-Konvertereinrichtung (Optical/Coax-Converter) OCC an eine optische Anschlußleitung eines über optische Verzweiger (Splitter) V verzweigten Lichtwellenleiternetzes OB angeschlossen, welches die Koaxialleiternetze mit einer vorzugsweise mit einem (ATM-) CrossConnect gebildeten Verbindungseinrichtung (Connection Unit) CU/A verbindet. An eine solche Verbindungseinrichtung CU/A können, wie dies auch in der Zeichnung angedeutet ist, mehrere derartige Lichtwellenleiternetze OB angeschlossen sein; in entsprechender Weise können, wie dies ebenfalls in der Zeichnung angedeutet ist, an eine Konvertereinrichtung OCC mehrere, z.B. bis zu vier, Koaxialleiter-Subnetze CN angeschlossen sein. Wenn ein Koaxialleiternetz CN den Anschluß von z.B. 100 Teilnehmern ermöglicht, bedient die Konvertereinrichtung OCC z.B. 400 Teilnehmer und die Verbindungseinrichtung (Connection Unit) CU/A z.B. 2000 bis 4000 Teilnehmer.

Die Übertragung im Teilnehmeranschlußnetz kann nach dem Synchronen Transfer-Modus STM oder auf der Basis von ATM-Zellen (cell-based) mit einem systemspezifischen Overhead vor sich gehen. Dabei wird in der Übertragungsrichtung zum Teilnehmer hin (downstream) die Datenrate mit z.B. 622 Mbit/s grösser sein als die Datenrate in der umgekehrten Übertragungsrichtung (upstream) mit z.B. 155 Mbit/s, wobei aus übertragungstechnischer Sicht die downstream-Übertragung in mehreren Kanälen (z.B. in vier Kanälen a 155 Mbit/s) vor sich gehen kann.

In dem in der Zeichnung skizzierten System werden TV-Verteilsignale von einer Kopfstelle (CATV Headend) her in die den angeschlossenen Teilnehmern gemeinsame Verbindungseinrichtung (Connection Unit) CU/A eingespeist und zu allen angeschlossenen Teilnehmern hin übertragen. Diese Fernsehsignale können beim Teilnehmer von einem an dessen Netzabschlußeinrichtung NT/A angeschlossenen, in der Zeichnung mit TV bezeichneten Fernsehempfänger in üblicher Weise empfangen werden.

Neben den TV-Signalen mögen in dem in der Zeichnung skizzierten Telekommunikationssystem der Verbindungseinrichtung (Connection Unit) CU/A digitale Signale im ATM-Format zugeführt werden. Solche Signale können z.B. digitale Videosignale eines (auch einen ATM-Rückkanal für die Programmwahl durch den TV-Teilnehmer einschliessenden) Video-on-Demand-Dienstes oder auch breitbandige interaktive Datensignale sein, wobei die digitalen Videosignale mittels eines entsprechenden, in der Zeichnung nicht gesondert dargestellten Zusatzgerätes (Set-Top-Box) ebenfalls vom Fernsehempfänger TV empfangen werden.

Des weiteren können in dem in der Zeichnung skizzierten System in beiden Richtungen schmalbandige ATM-Sprach- und ggf. auch Datensignale übertragen werden, was in der Zeichnung durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in der Zeichnung noch dargestellt werden müsste.

Die ATM-Signale werden über eine ATM-Vermittlungseinrichtung ASN geleitet. Für Video-On-Demand ist dabei ein Video-Server VS erforderlich, in welchem die abzurufenden Video-Programme (Filme) gespeichert sind, und zwar in der Regel in digitaler und datenkomprimierter Form, beispielsweise nach dem bei ISO-MPEG erarbeiteten MPEG2-Algorithmus mit z.B. 4 Mbit/s. Der Server VS möge von einem Controller VODC gesteuert werden, welcher von den angeschlossenen Teilnehmern über den jeweiligen Rückkanal kommende Signalisierungsinformationen auswertet und sowohl die Programmausgabe aus dem Video-Server VS als auch die ATM-Koppeleinrichtung ASN entsprechend steuert.

Die generelle Verwendung des Asynchronen Transfer-Modus (ATM) für die digitalen Signale aller Dienste (mit Ausnahme jedenfalls des auf Analogsignalübertragung basierenden TV-Verteildienstes) ist auf Grund seiner hohen Flexibilität außerordentlich vorteilhaft. Es lassen sich Signale mit unterschiedlichen, beliebigen Datenraten beliebig mischen; eine Wahl von Datenraten entsprechend bestimmten Hierarchiestufen ist überflüssig. Dies ist insbesondere auch für Videoübertragung sehr interessant, da zum einen eine allgemein vereinbarte Datenrate für ein Videosignal ohnehin nicht existiert und zum andern durch Wahl unterschiedlicher Datenraten unterschiedliche Bildqualitäten geboten werden können.

Der Zugriff der Teilnehmer (NT/A) auf das Netz unterliegt einer TDMA-Zugriffsprozedur; solche TDMA-Zugriffsprozeduren sind (beispielsweise aus Intern. J. of Digital and Analog Communication Systems, 6(1993), 143 ... 149,) bekannt und brauchen hier nicht weiter erläutert zu werden, zumal dies zum Verständnis der Erfindung nicht erforderlich ist. Die Zugriffsprozedur für den TDMA-Zugriff auf das Netz in upstream-Richtung kann für das ganze Teilnehmeranschlußnetz CN, OB wirksam sein. Alternativ dazu sind für das Lichtwellenleiter-Baumnetz und einzelne Koaxialleiter-Baumnetze auch separate Zugriffsprozeduren für den TDMA-Zugriff in upstream-Richtung möglich, wobei der Zugriff auf das Lichtwellenleiter-Baumnetz von der entsprechend ausgestatteten jeweiligen Konvertereinrichtung OCC bewirkt wird.

Die Trennung der interaktiven Telekommunikationsdienste von den Verteildiensten geschieht in der Regel durch Wellenlängenmultiplex: Wie dies auch in der Zeichnung angedeutet ist, werden die Signale der interaktiven Dienste auf Wellenlängen λ_{i down} und λ_{i up} und diejenigen der Verteildienste auf Wellenlängen λⱼ transportiert. Dabei ist durch die Indices i und j angedeutet, daß das Wellenlängenmultiplexprinzip nicht nur zur Dienstetrennung, sondern ggf. auch zur Kapazitätserhöhung Anwendung finden kann. Jeder Konvertereinrichtung kann dabei ein oder mehrere Wellenlängenpaar(e) individuell zugeordnet sein.

In dem in der Zeichnung skizzierten Multipunkt-zu-Punkt-Netz können nun die Übertragungseigenschaften (Übertragungsfunktionen) der einzelnen Verbindungen jeweils von einer dezentralen Netzabschlußeinrichtung NT/A zur demgegenüber zentralen, übergeordneten Einrichtung OCC oder CU/A hin unterschiedlich sein, so daß es zu unterschiedlichen Verzerrungen kommt. Zum Ausgleich solcher unterschiedlichen Verzerrungen wird nun in den Sendern der dezentralen Netzabschlußeinrichtungen NT/A eine jeweils verbindungsindividuelle Vorentzerrung des in upstream-Richtung zu übertragenden Signals vorgenommen. Hierzu ist in dem in der Zeichnung skizzierten Ausführungsbeispiel in den einzelnen Netzabschlußeinrichtungen NT/A jeweils zwischen dem sendeseitigen Modulator M und einer an der Koaxialleitung liegenden Frequenzweiche W ein entsprechender Vorentzerrer V vorgesehen. Für die umgekehrte Übertragungsrichtung wird in dem in der Zeichnung skizzierten Ausführungsbeispiel in den Empfängern der dezentralen Netzabschlußeinrichtungen NT/A eine jeweils verbindungsindividuelle Nachentzerrung des in downstream-Richtung übertragenen Signals vorgenommen; hierzu ist, wie dies auch in der Zeichnung angedeutet ist, in den einzelnen Netzabschlußeinrichtungen NT/A jeweils zwischen der an der Koaxialleitung liegenden Frequenzweiche W und dem empfangsseitigen Demodulator D ein entsprechender (Nach-)Entzerrer N vorgesehen.
Die Einstellinformation für den Vorentzerrer V der jeweiligen dezentralen Netzabschlußeinrichtung NT/A kann aus dem von der übergeordneten zentralen Einrichtung OCC bzw. CU/A zur dezentralen Netzabschlußeinrichtung NT/A übertragenen Signal gewonnen werden. Dabei kann, wie dies auch in der Zeichnung angedeutet ist, diese Einstellinformation unmittelbar aus der Einstellinformation für den Nachentzerrer N zumindest näherungsweise gewonnen werden, wobei bei Frequenzgetrenntlagebetrieb, d.h. bei Benutzung unterschiedlicher Frequenzbereiche für die beiden Übertragungsrichtungen, die mit der Einstellinformation für den Nachentzerrer N erreichte Näherung an die optimale Einstellinformation für den Vorentzerrer V um so besser ist, je geringer der Abstand der beiden Frequenzbereiche ist.
Die Vorentzerrer (V) brauchen prinzipiell nur einmal eingestellt zu werden; es kann aber auch eine in größeren zeitlichen Abständen wiederholte Vorentzerrer-Neueinstellung vorgenommen werden, um so z.B. temperatur- oder alterungsbedingte Änderungen der jeweiligen Übertragungsfunktion auszugleichen.

Die Konvertereinrichtungen OCC können auch zur Erfüllung weiterer, ggf. auch unterschiedlicher Funktionen ausgestattet sein, beispielsweise zu einer Geschwindigkeitsanpassung zwischen Lichtwellenleiter-Baumnetz OB und Koaxialleiter-Baumnetz CN. Eine Geschwindigkeitsanpassung kann etwa mit Hilfe von Multiplexern/Demultiplexern mit mit unterschiedlichen Geschwindigkeiten ein- und ausgelesenen Pufferspeichern geschehen, was hier indessen nicht näher erläutert werden muß, da dies zum Verständnis der Erfindung nicht mehr erforderlich ist.

## Patentansprüche

1. Vorzugsweise bidirektionales Telekommunikationsnetz mit dezentralen Einrichtungen (NT/A), insbesondere teilnehmerseitigen Netzabschlußeinrichtungen, die über jeweils einer Mehrzahl von dezentralen Einrichtungen (NT/A) gemeinsame Koaxialleitungs-Baumnetze (CN) und ggf. über ein jeweils einer Mehrzahl von Koaxialleitungs-Baumnetzen (CN) gemeinsames Lichtwellenleiter-Baumnetz mit einer demgegenüber zentralen Einrichtung (CU/A; OCC) verbunden sind, in dem zum Ausgleich von auf den einzelnen Verbindungen auftretenden, ggf. unterschiedlichen Verzerrungen jeweils verbindungsindividuell eine vorzugsweise adaptive Entzerrung durchgeführt wird, **gekennzeichnet durch**
eine jeweils verbindungsindividuelle Vorentzerrung in den Sendern der dezentralen Einrichtungen (NT/A), wobei die Einstellinformation für den Vorentzerrer (V) der dezentralen Einrichtung (NT/A) aus dem von der zentralen Einrichtung (CU/A; OCC) zur dezentralen Einrichtung (NT/A) übertragenen Signal gewonnen wird.

2. Telekommunikationsnetz nach Anspruch 1,
**dadurch gekennzeichnet,**
daß die Einstellinformation aus der Einstellinformation für einen Nachentzerrer (N) zur Nachentzerrung des in der dezentralen Einrichtung (NT/A) von der zentralen Einrichtung (CU/A; OCC) her empfangenen Signals gebildet wird.

3. Telekommunikationsnetz nach Anspruch 1 oder 2,
**gekennzeichnet durch**
eine in größeren zeitlichen Abständen wiederholte Vorentzerrer-Neueinstellung.
